(19) Europäisches Patentamt European Patent Office Office européen des brevets

(11) **EP 3 311 365 B1**

(12) **FASCICULE DE BREVET EUROPEEN**

(45) Date de publication et mention de la délivrance du brevet:
**06.05.2020 Bulletin 2020/19**

(21) Numéro de dépôt: **16734425.8**

(22) Date de dépôt: **07.06.2016**

(51) Int Cl.:
**G06T 7/60** (2017.01)

(86) Numéro de dépôt international:
**PCT/FR2016/051364**

(87) Numéro de publication internationale:
**WO 2016/203134 (22.12.2016 Gazette 2016/51)**

(54) **PROCÉDÉ D'ESTIMATION ET DE PRÉVISION D'INDICATEUR DE PRODUCTION D'ÉNERGIE D'UN SYSTÈME SOLAIRE**

VERFAHREN ZUR SCHÄTZUNG UND VORHERSAGE EINES ENERGIEERZEUGUNGSINDIKATORS FÜR EINE SOLARANLAGE

METHOD FOR ESTIMATING AND FORECASTING AN ENERGY PRODUCTION INDICATOR FOR A SOLAR SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.06.2015 FR 1555518**

(43) Date de publication de la demande:
**25.04.2018 Bulletin 2018/17**

(73) Titulaire: **Electricité de France
75008 Paris (FR)**

(72) Inventeurs:
• **GAUCHET, Charlotte
92150 SURESNES (FR)**
• **PAUL, Nicolas
93100 Montreuil (FR)**
• **DUBOST, Stéphanie
75019 Paris (FR)**

(74) Mandataire: **Plasseraud IP
66, rue de la Chaussée d'Antin
75440 Paris Cedex 09 (FR)**

(56) Documents cités:
• **Charlotte Gauchet ET AL: "Surface solar irradiance estimation with low-cost fish-eye camera", Workshop on Remote Sensing Measurements for Renewable Energy, 1 mai 2012 (2012-05-01), XP055263284, Risoe, Denmark Extrait de l'Internet: URL:https://hal-mines-paristech.archives-o uvertes.fr/docs/00/74/16/20/PDF/Extended_a bstract_-_Surface_solar_irradiance_estimat ion_with_low-cost_fish-eye_camera.pdf [extrait le 2016-04-06]**
• **Romain Dambreville: "Prévision du rayonnement solaire global par télédétection pour la gestion de la production d'énergie photovoltaïque", Thèse de l'école doctorale EEATS, 16 octobre 2014 (2014-10-16), pages 1-128, XP055263192, Extrait de l'Internet: URL:http://chercheurs.edf.com/fichiers/fck editor/Commun/Innovation/theses/TheseDambr eville.pdf [extrait le 2016-04-06]**
• **CHI WAI CHOW ET AL: "Intra-hour forecasting with a total sky imager at the UC San Diego solar energy testbed", SOLAR ENERGY, PERGAMON PRESS. OXFORD, GB, vol. 85, no. 11, 19 août 2011 (2011-08-19) , pages 2881-2893, XP028310461, ISSN: 0038-092X, DOI: 10.1016/J.SOLENER.2011.08.025 [extrait le 2011-08-24]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **DAMBREVILLE ROMAIN ET AL: "Very short term forecasting of the Global Horizontal Irradiance through Helioclim maps", 2014 5TH INTERNATIONAL RENEWABLE ENERGY CONGRESS (IREC); 25-27 MARCH 2014; HAMMAMET, TUNISIA, IEEE, PISCATAWAY, NJ, USA, 24 mars 2013 (2013-03-24), pages 1-6, XP032600988, DOI: 10.1109/IREC.2014.6826905 ISBN: 978-1-4799-2196-6 [extrait le 2014-06-05]**

**Description**

**Domaine technique**

L'invention concerne le domaine de l'estimation et de la prévision de production d'énergie d'un ou plusieurs systèmes de conversion d'énergie solaire (nommés systèmes solaires par la suite) comme, par exemple, des panneaux solaires ou des capteurs solaires thermiques.

**Etat de la technique**

Les moyens de conversion des systèmes solaires utilisés pour la génération d'énergie telle que de l'énergie électrique ou thermique, possèdent une production qui dépend de l'irradiation solaire incidente à laquelle ils sont exposés (nommée irradiation ci-après). Typiquement, un panneau solaire produit une énergie électrique qui varie en fonction des conditions d'ensoleillement et de luminosité de l'environnement proche du panneau.

Une prévision de l'irradiation du système solaire permet d'anticiper la quantité d'énergie qui sera produite sur un horizon de temps futur. Il existe différentes approches pour prévoir l'irradiation d'un tel système dont notamment :

- les prévisions utilisant des modèles météorologiques (horizon de prévision allant de quelques heures à plusieurs jours) ;
- les prévisions basées sur des mesures d'irradiation prises par un instrument de mesure au sol (tel qu'un capteur pyranométrique), des modèles mathématiques étant utilisés pour prévoir les valeurs des prochaines mesures sur la base d'un historique de mesures (horizon de prévision allant de quelques minutes à plusieurs heures) ;
- les prévisions par traitement d'images satellitaires, estimant le rayonnement solaire reçu au sol à partir de données satellitaires (horizon de prévision de l'ordre de quelques minutes à quelques heures) ;
- les prévisions utilisant les images du ciel prises à partir du sol pour déterminer un déplacement de couvertures nuageuses et en déduire l'irradiation au sol (horizon de prévision pouvant aller jusqu'à quelques minutes).

Avec ces dernières, i.e. les prévisions par traitement d'images du ciel prises à partir du sol, l'estimation et la prévision du rayonnement solaire au sol peut être effectuée avec une bonne précision, que ce soit en temps réel ou sur la base d'une prévision à horizon de temps proche (5 à 15 minutes par exemple). Il est entendu par horizon de prévision l'intervalle de temps entre le moment où la prévision est effectuée et le moment auquel se passe l'événement prévu.

Généralement, les prévisions basées sur des images du ciel prises à partir du sol comprennent au moins trois phases qui sont :

- la localisation d'un masque nuageux,
- l'estimation du mouvement du masque nuageux et
- la détermination du rayonnement solaire au sol en fonction du ou des masques nuageux détectés et de leurs mouvements estimés.

Lors de la première phase, la présence d'un masque nuageux est classiquement reconnue à partir d'une image prise depuis une zone d'intérêt (à proximité de panneaux solaires typiquement). A partir de la localisation du masque nuageux sur l'image, un indice de couverture nuageuse au niveau de la zone d'intérêt peut être calculé.

Dans la deuxième phase, le déplacement du ou des masques détectés est étudié.

Dans un troisième temps, les images sont traduites en valeurs de rayonnement au sol en fonction des couvertures nuageuses détectées et de leurs déplacements. A cet effet, des méthodes de traitement connues en soi peuvent être utilisées pour convertir le niveau de chaque pixel d'images en une valeur brute d'irradiation au sol. A titre purement illustratif, une des méthodes de traitement possibles est décrite dans le document US20100309330.

D'autres méthodes sont également décrites dans les documents suivants: Charlotte Gauchet et al.: "Surface solar irradiance estimation with low-cost fish-eye camera", Workshop on Remote Sensing Measurements for Renewable Energy 2012 ; Romain Dambreville: "Prévision du rayonnement solaire global par télédétection pour la gestion de la production d'énergie photovoltaïque", Thèse de l'école doctorale EEATS 2014 ; Chi Wai Chow et al: "Intra-hour forecasting with a total sky imager at the UC San Diego solar energy testbed", Solar energy, Pergamon Press vol. 85, no. 11 ; Dambreville Romain et al: "Very short term forecasting of the Global Horizontal Irradiance through Helioclim maps", 5th international renewable energy congress IREC 2014.

Toutefois, il s'avère que les couvertures nuageuses sont habituellement considérées comme impactant le rayonnement au sol indépendamment de leur position par rapport à la zone d'intérêt. Or, une couverture nuageuse qui est à l'horizon terrestre par rapport à la zone d'intérêt n'a pas une même influence sur l'irradiation perçue au sol qu'une autre couverture nuageuse qui serait quant à elle au zénith par exemple. Il s'avère qu'une couverture nuageuse au zénith a des pixels qui impactent plus directement le rayonnement perçu au sol. Des divergences importantes peuvent ainsi apparaître entre la valeur de rayonnement au sol estimée ou prévue et l'irradiation réellement perçue sur la zone d'intérêt.

Ces divergences créent un biais dans l'estimation et la prévision de la production d'énergie des systèmes solaires et, par répercussion, nuit à l'optimisation de la gestion d'énergie (avec en l'occurrence une évaluation erronée de la quantité d'énergie réellement produite et/ou à produire en compensation par d'autres dispositifs de production).

Il existe ainsi un besoin de mettre en place un procédé plus précis d'estimation et de prévision de production d'énergie d'un système solaire.

L'invention vient améliorer la situation en ce sens.

**Résumé de l'invention**

L'objet de l'invention est de remédier aux inconvénients précités en proposant notamment de prendre en compte la localisation des nuages sur une image du ciel prise à partir du sol en vue d'estimer la production d'énergie d'un système solaire.

A cet effet, un premier aspect de l'invention concerne un procédé d'estimation d'indicateur de production d'énergie d'un système solaire comprenant les étapes de :

a) réception d'images du ciel prises au sol depuis une zone terrestre comportant le système solaire, chaque image reçue comprenant au moins un repère optique ;
b) extraction des valeurs de pixels et localisation de pixels d'une image issue des images reçues ;
c) détermination des distances d'éloignement entre les pixels localisés et l'au moins un repère optique de l'image issue des images reçues ;
d) génération d'un vecteur de paramètres à partir d'une classification des pixels selon les valeurs extraites et les distances d'éloignement déterminées ;
e) comparaison des paramètres du vecteur généré avec des paramètres prédéterminés, les paramètres prédéterminés étant respectivement associés à des indicateurs de production d'énergie ;
f) estimation de l'indicateur de production d'énergie du système solaire à partir des indicateurs de production d'énergie des paramètres prédéterminés comparés au vecteur généré.

Le repère optique des images reçues peut être par exemple :

- le centre optique de la caméra ou de l'appareil photo dont est issu l'image, notamment lorsque cette caméra ou cet appareil est muni d'un objectif ayant un angle de champ supérieur à 170 degrés (appareil de prise d'image à objectif de type « fish-eye », qui signifie œil de poisson en anglais),

- le centre de l'image lorsqu'elle est prise par une caméra ou un appareil photo muni d'un objectif ayant un angle de champ inférieur à 170 degrés,

- la localisation du soleil sur l'image issue des images reçues,

- ou autre.

Selon une réalisation préférée, lorsque le repère optique est la localisation du soleil, la distance au soleil est déterminée entre les pixels et le centre du soleil sur l'image du ciel.

L'indicateur de production d'énergie est une donnée qui peut être directement relative à la production d'énergie du système solaire ou, être une donnée correspondant à une grandeur qui impacte la production d'énergie. L'indicateur d'énergie peut en particulier être :

- un rayonnement solaire au niveau du système solaire ou de la zone terrestre depuis laquelle les images reçues sont prises ;

- une production d'énergie électrique du système solaire ;

- une production d'énergie thermique du système solaire ;

- ou autre donnée relative à une production d'énergie s'expliquant au premier ordre à l'aide du rayonnement solaire.

Selon des réalisations préférées mais non limitatives, les indicateurs de production d'énergie sont des données de rayonnement solaire et/ou de production d'énergie électrique.

La classification des pixels en fonction de leurs valeurs respectives et distances d'éloignement par rapport au repère optique permet d'identifier les éléments du ciel auxquels correspondent les pixels de l'image (ciel dégagé, nuage ou soleil typiquement) et la localisation de ces éléments dans le ciel par rapport à la zone dans laquelle le système solaire est installé.

Les distances déterminées entre les pixels et le repère optique permettent notamment de qualifier les contributions respectives des éléments du ciel identifiés à la production d'énergie du système solaire. A titre d'exemple, plus la distance d'éloignement entre le pixel correspondant à un nuage et le repère optique est grande, moins la contribution du pixel pour l'estimation de la production d'énergie peut être importante, et inversement.

L'estimation d'indicateur de production d'énergie peut ainsi être basée sur des indicateurs de production d'énergie prédéterminés (irradiation au niveau de panneaux solaires, production d'énergie électrique effective de panneaux solaires ou autre) dont l'importance peut être modérée par des coefficients relatifs, voire proportionnels, aux distances d'éloignement des pixels par rapport au centre optique de l'image ou à un ou plusieurs points d'intérêt de cette image, comme la localisation du soleil. L'estimation est alors plus précise qu'avec l'attribution d'une même contribution pour tous les pixels de l'image comme dans l'état de la technique, ou tout au moins l'attribution d'une même contribution indépendamment des positions dans l'image des éléments de ciel détectés.

Un poids particulier peut notamment être attribué aux indicateurs de production d'énergie issus de paramètres correspondant à des nuages clairs. Ce poids particulier permet de tenir compte dans l'estimation de la contribution supplémentaire de nuages clairs. En effet, de tels nuages clairs sont des sources secondaires importantes de rayonnement solaire, d'intensité d'autant plus importante que leur distance au soleil est proche sur l'image. À ce titre, le poids des indicateurs associés aux paramètres prédéterminés correspondant à des nuages clairs peuvent être augmentés dans l'estimation. Cette pondération complémentaire rend l'estimation d'indicateur de production d'énergie d'autant plus précise.

On entend par système solaire tout système configuré pour transformer l'énergie solaire en une autre énergie, par exemple une énergie électrique ou thermique. Un système solaire peut être par exemple un ou plusieurs panneaux photovoltaïques, panneaux thermiques, chauffe-eau solaires ou autre.

Selon une réalisation avantageuse, à l'étape f), l'estimation d'indicateur de production d'énergie est en outre issue d'une pondération des indicateurs de production associés aux paramètres prédéterminés, la pondération étant fonction d'écarts de valeurs entre les paramètres du vecteur et les paramètres prédéterminés.

Il est alors possible d'attribuer des poids plus ou moins forts aux paramètres prédéterminés en fonction de leur pertinence par rapport au vecteur de paramètres, de sorte notamment à cibler plus particulièrement les paramètres prédéterminés qui sont égaux ou proches des paramètres du vecteur. A titre d'exemple purement illustratif, le poids des indicateurs associés aux paramètres prédéterminés les plus proches du vecteur peuvent être augmentés dans l'estimation, et le poids des indicateurs associés aux autres paramètres prédéterminés peut être diminué. Une telle pondération permet d'améliorer encore la qualité de l'estimation de production d'énergie.

Selon différentes réalisations possibles, la pondération peut être appliquée aux indicateurs associés à :

- l'ensemble de paramètres prédéterminés, ou

- des paramètres prédéterminés avec des valeurs proches du vecteur de paramètres généré comme par exemple des paramètres prédéterminés ayant des valeurs comprises dans une plage prédéfinie autour des valeurs du vecteur, telle qu'une plage comprise entre +30% et -30% des valeurs du vecteur généré.

Avantageusement, à l'étape d), le vecteur de paramètres dans lequel sont classifiés les pixels comprend au moins :

- une première catégorie de paramètres correspondant à un ciel clair,
- une deuxième catégorie de paramètres correspondant au soleil,
- une troisième catégorie de paramètres correspondant aux nuages.

Dans ce mode de réalisation, les pixels sont ainsi classifiés selon trois catégories permettant de définir à quel élément du ciel ils correspondent.

Selon une réalisation possible, seuls les paramètres correspondant aux nuages sont comparés aux paramètres prédéterminés. Ceci permet de limiter le nombre de calculs (par rapport à une comparaison avec tous les paramètres à l'étape e)) tout en conservant une estimation précise de la production d'énergie en se basant sur l'une des catégories d'élément du ciel qui impacte le plus directement les variations de production d'un système solaire.

Avantageusement, la troisième catégorie de paramètres comprend :

- une première sous-catégorie de paramètres correspondant aux nuages clairs, dans laquelle sont classifiés des pixels de valeur supérieure ou égale à un seuil,
  - une deuxième sous-catégorie de paramètres correspondant aux nuages sombres, dans laquelle sont classifiés des pixels de valeur inférieure au seuil.

A titre d'exemple purement illustratif, le seuil correspond à une valeur de luminance du pixel dont le signal d'intensité $I$ est défini par la combinaison linéaire suivante (où les coefficients sont des pondérations universelles standardisées ITU-RBT709) :

$$I = 0.2126 \, Ir + 0.7152 \, Iv + 0.0722 \, Ib$$

Les première et deuxième sous-catégories permettent de faire une distinction entre les nuages clairs et les nuages sombres, lesquels n'ont pas le même impact sur la production d'énergie d'un système solaire. En effet, un nuage clair peut se comporter comme une source de rayonnement solaire secondaire alors qu'un nuage sombre peut quant à lui absorber complètement les rayonnements solaires.

Selon un mode de réalisation de l'invention, le procédé comprend en outre une étape de détermination d'une proportion de couverture nuageuse sur l'image issue des images reçues en fonction des pixels classifiés dans la troisième catégorie de paramètres.

La proportion de couverture nuageuse peut être utilisée pour des évaluations des conditions météorologiques, en vue notamment de vérifier ou prévoir la présence dans le ciel de masque nuageux. Par exemple, si la proportion de pixels classifiés dans la troisième catégorie (i.e. catégorie « nuage ») est importante (nombre de pixels de l'image appartenant la catégorie « nuage » est égal ou supérieur à un seuil prédéfini), l'image issue des images reçues peut être considérée comme une image d'un ciel nuageux.

Par ailleurs, cette évaluation peut être affinée en segmentant l'image en plusieurs parties (huit en l'occurrence) et en déterminant la proportion de couverture nuageuse dans chaque partie de l'image.

Selon une réalisation avantageuse, à l'étape b), l'image issue des images reçues est une image générée selon les étapes suivantes :

- récupération parmi les images reçues d'images prises à au moins un premier instant et un deuxième instant, le premier instant étant antérieur au deuxième instant ;
- localisation des valeurs de pixels sur les images prises respectivement au premier et au deuxième instant ;
- comparaison des localisations des valeurs de pixels au premier instant et au deuxième instant ;
- détermination des déplacements, entre les premier et deuxième instants, d'au moins une partie des valeurs de pixels localisées ;
- génération de l'image du ciel pour un troisième instant en fonction des déplacements déterminés, le troisième instant étant postérieur au deuxième instant.

Le troisième instant peut correspondre notamment à un horizon de temps donné (i.e. instant futur pour lequel l'estimation d'indicateur de production d'énergie du système solaire est souhaitée). En appliquant les étapes b) à e) du procédé d'estimation à une image générée pour le troisième instant permet de prévoir la production d'énergie à un instant futur. Le procédé proposé peut ainsi être un procédé d'estimation et de prévision d'indicateur de production d'énergie.

Avantageusement, le procédé comprend en outre une étape de détermination d'une plage d'indicateur de production d'énergie qui est fonction d'un écart type calculé à partir de la racine d'une moyenne pondérée d'écarts quadratiques entre des indicateurs de production des paramètres prédéterminés et la production estimée, la moyenne étant pondérée en fonction d'écarts de valeurs entre les paramètres du vecteur généré et les paramètres prédéterminés.

Cet écart type permet de définir un intervalle de confiance autour de l'indicateur de production d'énergie estimé, conférant à l'estimation une borne supérieure et une borne inférieure de production d'énergie attendue.

Le procédé peut en outre comprendre une étape de réception d'une donnée de :

- rayonnement solaire effectif au sol dans la zone terrestre, ou
- production d'énergie effective du système solaire.

La donnée reçue peut en particulier être utilisée pour étalonner ou corriger les indicateurs de production d'énergie associés aux paramètres prédéterminés.

De cette manière, les paramètres prédéterminés peuvent être étalonnés, réinitialisés et/ou ajustés selon des mesures d'irradiation ou de production effective au sol, permettant d'affiner les données utilisées pour l'estimation et de fait, rendre la prévision de production d'énergie du système solaire encore plus précise et robuste. Par exemple, la donnée reçue peut être issue d'un moyen de mesure pyranométrique ou d'une mesure de la production d'énergie du système solaire lui-même.

Selon un deuxième aspect, l'invention propose un dispositif d'estimation d'indicateur de production d'énergie d'un système solaire, le dispositif d'estimation comprenant au moins :

- une interface d'entrée pour la réception d'images du ciel prises au sol depuis une zone terrestre comportant le système solaire ;
- une mémoire configurée pour stocker :

  ■ les images du ciel reçues, et
  ■ des paramètres prédéterminés respectivement associés à des indicateurs de production d'énergie ;

- une unité de traitement de données connectée à l'interface d'entrée et à la mémoire.

L'unité de traitement de données étant configurée pour mettre en œuvre le procédé précité pour estimer l'indicateur de production d'énergie du système solaire.

Selon un mode de réalisation du dispositif, l'interface d'entrée est :

∘ connectée à un appareil de prise d'image orienté vers le ciel au niveau de la zone terrestre, l'appareil de prise d'image étant muni d'un objectif ayant un angle de champ supérieur à 170 degrés ; et/ou

∘ configurée pour recevoir des données de :

  ■ rayonnement solaire effectif au sol dans la zone terrestre, ou
  ■ production d'énergie effective du système solaire.

La donnée reçue peut être plus particulièrement une donnée émise par un pyranomètre placé au voisinage du système solaire.

La présente invention vise également un programme informatique comportant des instructions pour la mise en œuvre du procédé précédemment décrit, lorsque ce programme est exécuté par une unité de traitement de données telle qu'un processeur.

Ce programme peut utiliser n'importe quel langage de programmation (par exemple, un langage objet ou autre), et être sous la forme d'un code source interprétable, d'un code partiellement compilé ou d'un code totalement compilé.

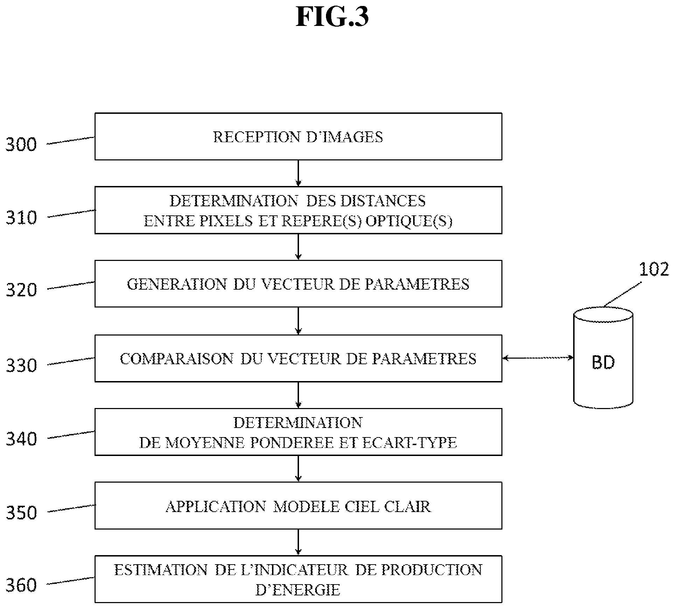

Les figures 3, 5 et 7 décrites en détails ci-après, peuvent former des organigrammes de l'algorithme général d'un tel programme informatique.

**Brève description des figures**

D'autres caractéristiques et avantages de l'invention apparaîtront à l'examen de la description détaillée ci-après, et des figures annexées sur lesquelles :

- la **figure 1** illustre un exemple de dispositif d'estimation d'un indicateur de production d'énergie d'un système solaire selon un exemple de réalisation de l'invention ;

- les **figures 2** (figures 2A à 2D) illustrent des exemples dans lesquels des images du ciel sont prises au sol depuis une zone terrestre où se trouve des panneaux photovoltaïques ;

- la **figure 3** représente un organigramme composé d'un exemple de succession d'étapes du procédé d'estimation selon l'invention ;

- la **figure 4** est une représentation graphique d'une base de données comportant des paramètres prédéterminés ;

- la **figure 5** représente un organigramme composé d'un exemple de succession d'étapes pour la construction d'une base de données de paramètres prédéterminés ;

- la **figure 6** représente un organigramme composé d'un exemple de succession d'étapes permettant de générer une image de ciel à partir d'images de ciel prises au sol depuis la zone terrestre ;

- les **figures 7** (figures 7A à 7C) illustrent des exemples d'images prises à partir du sol de la zone de terrestre dans laquelle est installé le système solaire et d'une image généré à partir de ces images ; et

- la **figure 8** représente des exemples de courbes de rayonnements solaires mesurés, estimés et prévus selon le procédé d'estimation proposé.

Pour des raisons de clarté, les dimensions des différents éléments représentés sur ces figures ne sont pas en proportion avec leurs dimensions réelles. Sur les figures, des références identiques correspondent à des éléments identiques pour les différents modes de réalisation exposés.

**Description détaillée**

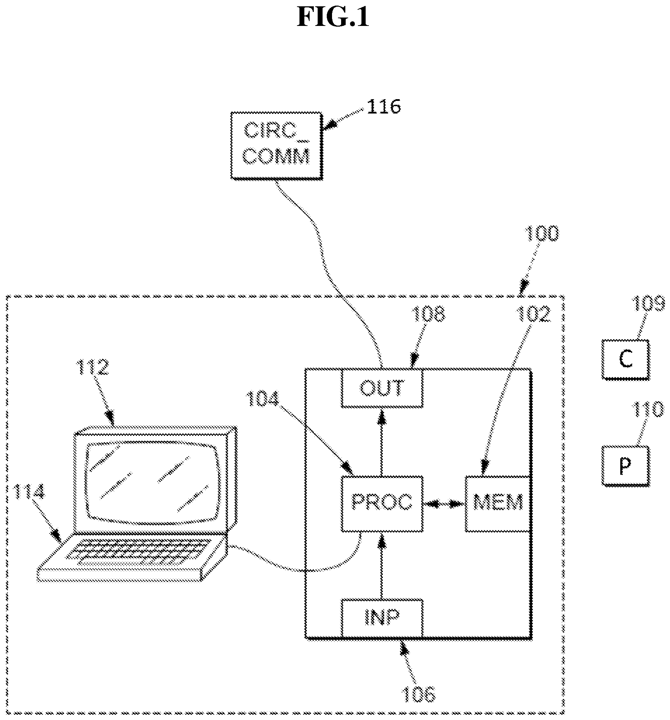

On se réfère tout d'abord à la **figure 1** qui illustre un exemple de dispositif d'estimation d'un indicateur de production d'énergie d'un système solaire selon un exemple de réalisation de l'invention.
Dans ce mode de réalisation, le dispositif comporte un ordinateur 100, comprenant une mémoire 102 pour stocker :

- des instructions permettant la mise en œuvre du procédé,

- d'images du ciel,

- de paramètres prédéterminés associés à des indicateurs de production d'énergie, et

- de données temporaires pour réaliser les différentes étapes du procédé tel que décrit précédemment et détaillé plus loin.

L'ordinateur comporte en outre une unité de traitement de données 104. Cette unité de traitement de données peut être un circuit comme par exemple :

- un processeur apte à interpréter des instructions sous la forme de programme informatique, ou
- une carte électronique dont les étapes du procédé de l'invention sont décrites dans le silicium, ou encore
- une puce électronique programmable comme une puce FPGA (pour « Field-Programmable Gate Array » en anglais).

Cet ordinateur 100 comporte aussi :

◦ une interface d'entrée 106 pour :

■ la réception d'images du ciel prises au sol depuis une zone terrestre comportant le système solaire, par exemple par un appareil de prise d'images telle qu'une caméra 109 ou un appareil photo,

■ d'une donnée de rayonnement solaire effectif au sol dans la zone terrestre ou de production d'énergie effective du système solaire,

◦ une interface de sortie 108 pour la fourniture à un dispositif distant 116 de commandes de contrôle ou de résultats d'estimation selon le procédé.

Le système solaire peut par exemple être un ou plusieurs panneaux solaires 110 installés dans la zone terrestre depuis laquelle les images du ciel sont prises par la caméra 109. Le système solaire peut être configuré pour mesurer une production d'énergie effective et pour la communiquer à l'ordinateur 100 via une liaison de communication avec l'interface d'entrée 106.
La caméra 109 peut être située à une même localisation que le système solaire ou dans une zone autour du système solaire, par exemple à une localisation située dans un rayon inférieur ou égal à quelques kilomètres (1 à 10 km par exemple) par rapport aux panneaux solaires 110. Une calibration de la caméra au préalable peut être effectuée de sorte à mettre en correspondance chaque pixel de l'image avec des angles de visée (élévation, azimut) déterminés pour que les images prises soient représentatives du ciel au-dessus du système solaire.
L'ordinateur peut par ailleurs comporter, pour permettre une interaction aisée avec un utilisateur, un écran 112 et un clavier 114. Bien entendu, le clavier est facultatif, notamment dans le cadre d'un ordinateur ayant la forme d'une tablette tactile ou d'un Smartphone, par exemple.

Typiquement, le dispositif distant 116 peut être une plateforme de service ou un terminal de client apte à recevoir les estimations envoyées par le dispositif via l'interface de sortie 108. A cet effet, le dispositif 116 peut comporter une interface de communication apte à recevoir des données communiquées par le dispositif et une unité de traitement de données pour les interpréter. Ainsi, les données d'estimation d'un indicateur de production d'énergie reçues par le dispositif distant 116 peuvent être utilisées par ce dernier pour gérer et anticiper la production du système solaire. A titre d'exemple purement illustratif, un utilisateur peut recevoir sur son téléphone les estimations de production des panneaux photovoltaïques installés sur le toit de son domicile. Ainsi, l'utilisateur peut optimiser sa consommation en anticipant la production d'énergie des panneaux selon la production estimée. Des services variés peuvent être proposés à des utilisateurs en fonction de différentes interprétations possibles des estimations reçues par le dispositif distant 116.

L'interface 106 peut en outre recevoir des données d'un pyranomètre relatives au rayonnement solaire effectif au sol ou des données de production d'énergie du panneau solaire lui-même. Ces données peuvent par exemple être une valeur brute d'irradiation mesurée par le pyranomètre à proximité des panneaux solaires 110 ou une déduction d'une telle valeur brute d'irradiation en fonction de la production d'énergie effective des panneaux 110. Cette donnée peut notamment permettre de corriger les indicateurs de production d'énergie associés aux paramètres prédéterminés, comme décrit plus loin. Une telle correction peut être effectuée une seule fois pour un étalonnage des données ou bien au fur et à mesure pour une correction rétroactive.

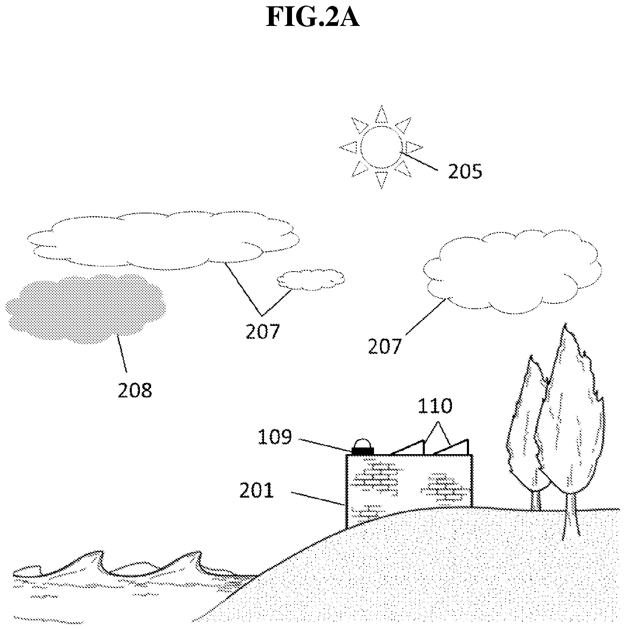

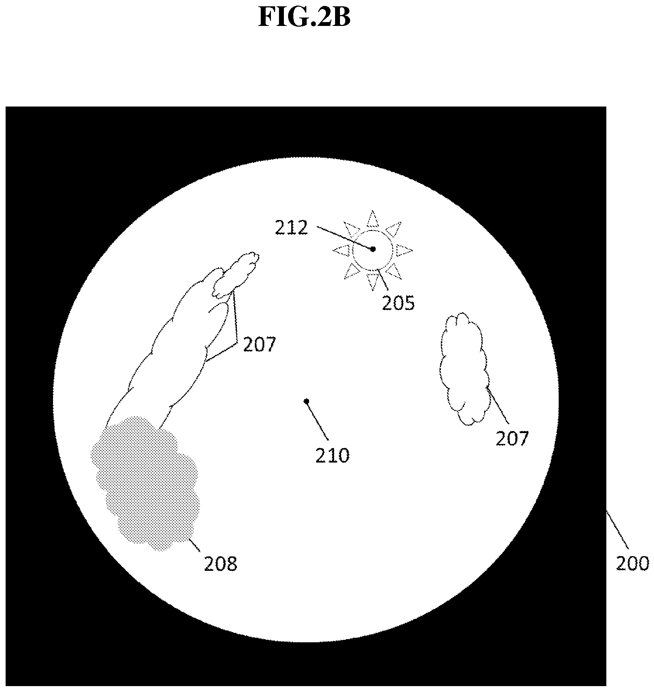

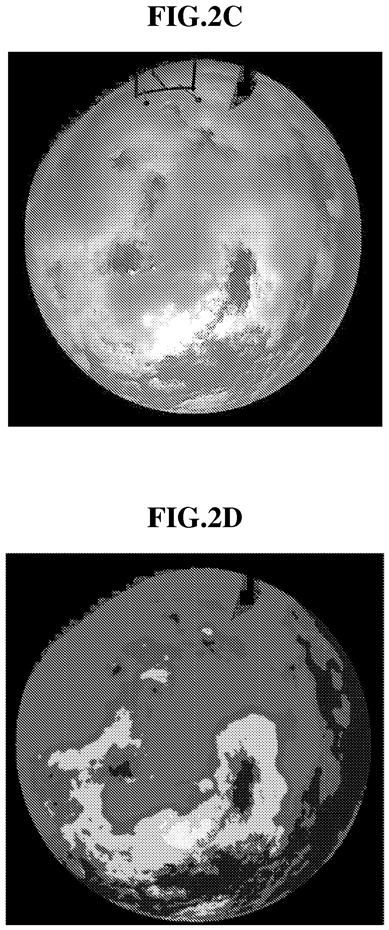

Aux **figures 2** (figures 2A à 2D), il est illustré des exemples dans lesquels des images du ciel sont prises au sol depuis une zone terrestre où se trouvent des panneaux photovoltaïques tels que les panneaux 110, et qui sont reçues par l'ordinateur 100 via l'interface 106.

La figure 2A représente une situation dans laquelle les panneaux solaires 110 sont par exemple installés sur le toit d'un bâtiment 201 (le domicile d'un utilisateur typiquement). Dans cet exemple, la caméra 109 est placée à proximité des panneaux solaires 110, sur le toit du bâtiment 201, et est orientée vers le ciel afin de réaliser des captures d'image à partir du sol de la zone terrestre dans laquelle se trouve les panneaux 110.

Toutefois, selon d'autres réalisations possibles, la caméra 109 peut être placée :

- à une position confondue avec celle des panneaux solaires 110 ou
- dans un périmètre approprié autour des panneaux.

La zone terrestre dans laquelle se trouve un système solaire tel que les panneaux 110 peut être définie par un espace autour de ce système dans lequel une image du ciel prise depuis le sol correspond au ciel qui est réellement au-dessus du système solaire. En effet, en vue de l'estimation de production du système solaire, il convient que l'image prise depuis la zone terrestre soit représentative du ciel effectivement au-dessus du système.

Il convient néanmoins de noter que plus la prise d'images du ciel est effectuée près du système solaire, plus les images prises seront représentatives du ciel au-dessus du système solaire, permettant d'obtenir une meilleure qualité d'estimation de l'indicateur de production d'énergie.

La caméra 109 est ici une caméra comportant un objectif de type « fish-eye » (ayant un angle de champ supérieur à 170 degrés). Selon d'autres alternatives possibles, la caméra peut être un appareil de prise de vue (un appareil photo ou une webcam par exemple) ayant un objectif de type « fish-eye » ou un objectif ayant un angle de champ inférieur à 170 degrés. La caméra 109 est orientée vers le ciel pour prendre des images de celui-ci avec des éléments de ciel tels que le soleil 205, des nuages clairs 207 et des nuages sombres 208.

A la figure 2B, une image 200 prise par la caméra 109 est illustrée. L'image 200 comprend un premier repère optique 210 correspondant au centre optique de la caméra 109 et un deuxième repère optique 212 correspondant à la localisation du centre du soleil 205 sur l'image. L'image 200 est représentative des conditions de ciel au-dessus des panneaux 110. A partir de l'image 200, il est possible d'analyser les valeurs des pixels pour déterminer à quel type d'élément du ciel (ciel dégagé, soleil 205, nuages clairs 207, nuages sombres 208) correspond chaque pixel de l'image.

La figure 2C illustre un autre exemple d'image du ciel prise par la caméra 109 et la figure 2D représente cette image suite à un traitement des valeurs des pixels de l'image. Ce traitement peut notamment consister à :

- identifier les valeurs des pixels de l'image,

- déterminer à quel élément de ciel les valeurs de pixels correspondent (ciel clair, nuage clair, nuage sombre, disque solaire, région circumsolaire),

- classer dans un vecteur de paramètres les pixels selon l'élément de ciel déterminé pour leur valeur,

- afficher les pixels de l'image selon une couleur correspondant à l'élément de ciel auquel ils ont été attribués (par exemple rouge pour le disque du soleil, jaune pour la région circumsolaire, bleu pour le ciel clair, cyan pour les nuages clairs et violet pour les nuages sombres).

Ce traitement de l'image prise par la caméra correspond à une segmentation des pixels selon des catégories d'élément de ciel correspondant au moins au soleil, à des nuages et à un ciel clair. Elles peuvent être complétées par d'autres éléments comme ceux précités : nuages clairs ou sombres, centre du soleil, disque solaire, région circumsolaire, etc.

On se réfère maintenant à la **figure 3** représentant un organigramme composé d'un exemple de succession d'étapes du procédé d'estimation d'indicateur de production d'énergie de système solaire.

L'étape 300 correspond à la réception d'images du ciel prises par la caméra 109. Les images reçues comprennent au moins un repère optique qui peut être :

- le centre optique de la caméra lorsque l'objectif est de type « fish-eye »

- le centre de l'image lorsque l'objectif de la caméra à un angle de champ inférieur à 170 degrés,

- la localisation du soleil sur l'image.

Selon une étape 310, les images reçues peuvent être traitées de sorte à extraire des valeurs de pixels et à localiser des pixels des images. L'image issue des images reçues peut être directement l'une des images reçues ou une image générée à partir d'images reçues, comme détaillé plus loin. Il est alors possible de déterminer par rapport au(x) repère(s) optique(s) de l'image, la distance d'éloignement des pixels localisés. Cette distance est typiquement déterminée en nombre de pixels qui séparent le pixel localisé et le repère optique, ou alors selon un angle d'élévation ou autre.

Comme précité, le repère optique sur l'image peut être le soleil. La distance au soleil des pixels correspondant aux nuages clairs et sombres peut aussi être déterminée. Cette distance peut notamment être déterminée entre le centre du soleil et la position du pixel sur l'image.

Ensuite, une étape 320 de génération d'un vecteur de paramètres peut consister à classer des pixels de l'image en fonction des valeurs extraites et des distances d'éloignement déterminées. Les paramètres contenus dans le vecteur peuvent respectivement correspondre à des catégories d'éléments de ciel telles que celles précitées : ciel clair, nuage clair, nuage sombre, disque solaire, région circumsolaire.

Le vecteur de paramètres dans lequel sont classifiés les pixels peut notamment comprendre :

- une première catégorie de paramètres correspondant à un ciel clair, dans laquelle sont classés les pixels dont la valeur extraite :

    ◦ est comprise dans une première plage de valeurs de pixels ou
    ◦ dépasse un premier seuil de valeur,

- une deuxième catégorie de paramètres correspondant au soleil, dans laquelle sont classés les pixels qui sont proches du soleil (par exemple dans un rayon déterminé) dont la valeur extraite :

    ◦ est comprise dans une deuxième plage de valeurs de pixels ou
    ◦ dépasse un deuxième seuil de valeur,

- une troisième catégorie de paramètres correspondant aux nuages, dans laquelle sont classés les pixels dont la valeur extraite :

    ◦ est comprise dans une troisième plage de valeurs de pixels ou
    ◦ dépasse un troisième seuil de valeur.

Par ailleurs, la troisième catégorie de paramètres correspondant aux nuages peut comprendre au moins deux sous-catégories permettant de distinguer les nuages sombres des nuages clairs. Les pixels sont affectés à la première ou la deuxième sous-catégorie si sa valeur est inférieure ou supérieure à un seuil.

Par exemple, le seuil qui limite la première et la deuxième sous-catégorie peut être par exemple une valeur de luminance dont le signal d'intensité I est défini par la combinaison linéaire suivante (où les coefficients sont des pondérations universelles standardisées ITU-RBT709) :

$$I = 0.2126 \, Ir + 0.7152 \, Iv + 0.0722 \, Ib$$

Le seuil qui limite la deuxième et la troisième catégorie de paramètres peut quant à lui être une valeur de luminance dont le signal d'intensité *I* est défini par la combinaison linéaire suivante :

$$I = 0.2989 \, Ir + 0.5870 \, Iv + 0.1140 \, Ib$$

Toutefois, il convient de noter que les seuils et plages qui caractérisent les différentes catégories et sous-catégories de paramètres peuvent évoluer, par exemple en fonction de l'appareil de prise d'image utilisé.
Lors de la génération du vecteur de paramètres, des coefficients peuvent être associés aux pixels. Ces coefficients prennent en compte notamment la catégorie d'élément de ciel correspondant au pixel et la distance de pixel par rapport au repère optique.
Par exemple, les coefficients *C1* et *C2* associés aux pixels sont définis selon les équations suivantes :

$$C1 = \sum ( \, ndg(pixel) * \sin(\gamma) \, ) / \sum \sin \quad (\gamma)$$

$$C2 = \sum ( \, luminance(pixel) * distS \, ) / \sum distS$$

où « *ndg* » est la valeur des pixels mise en niveau de gris et $\gamma$ est l'élévation pour chaque pixel et où « *luminance* » est la valeur des pixels mise en luminance et *distS* correspond à la distance du pixel au soleil sur l'image.
A l'étape 330, les paramètres du vecteur sont comparés avec des paramètres prédéterminés enregistrés dans la mémoire 102. Dans la mémoire 102, les paramètres prédéterminés en question sont respectivement associés à des indicateurs de production d'énergie. A l'issue de cette comparaison, il est possible de situer le vecteur de paramètres par rapport à l'historique constitué par les paramètres prédéterminés. Des opérations complémentaires vont pouvoir ainsi être procédées pour estimer plus finement la production d'énergie du système solaire en fonction des paramètres prédéterminés auquel a été comparé le vecteur généré.
A l'étape 340, une moyenne pondérée des indicateurs de production peut être effectuée, la pondération étant fonction de la distance des paramètres prédéterminés associés aux indicateurs par rapport au vecteur de paramètres. Typiquement, le poids des indicateurs peut être :

- augmenté pour les paramètres prédéterminés proches du vecteur, et
- diminué pour les autres paramètres prédéterminés.

A titre d'exemple purement illustratif, la moyenne pondérée est nommée *Kmoy* et est défini pour *k* vecteurs de paramètres selon l'équation :

$$Kmoy = \frac{\sum poids(k) * K(k)}{\sum poids(k)}$$

La variable *poids(k)* peut être calculée à partir d'un noyau gaussien donné par :

$$poids(k) = e^{-dpond(k)^2/h^2}$$

où *h* est une variable relative à la largeur du noyau et *dpond* correspond à la distance pondérée entre les paramètres prédéterminés *X* et le vecteur de paramètres *x* :

$$dpond(k) = \sqrt{\frac{\sum_{i=1}^{5} px(i) * \big(X(k,i) - x(i)\big)^2}{\sum_{i=1}^{5} px(i)}}$$

Les pondérations px permettent d'accorder plus ou moins d'importance aux différents paramètres selon le type d'irradiation à estimer (globale, directe, ou diffuse). D'autres noyaux peuvent être utilisés comme par exemple une décroissance exponentielle ou un noyau uniforme (i.e. constant sur une certaine distance puis nul au-delà de cette distance).

La moyenne pondérée *Kmoy* peut être effectuée :

- sur l'ensemble des paramètres prédéterminés, ou

- seulement pour une partie des paramètres prédéterminés, par exemple en ne prenant en compte que :

  ◦ les paramètres prédéterminés situés dans un rayon donné autour du vecteur de paramètres, ou

  ◦ les paramètres prédéterminés les plus proches du vecteur à partir d'une distance donnée autour du vecteur de paramètres.

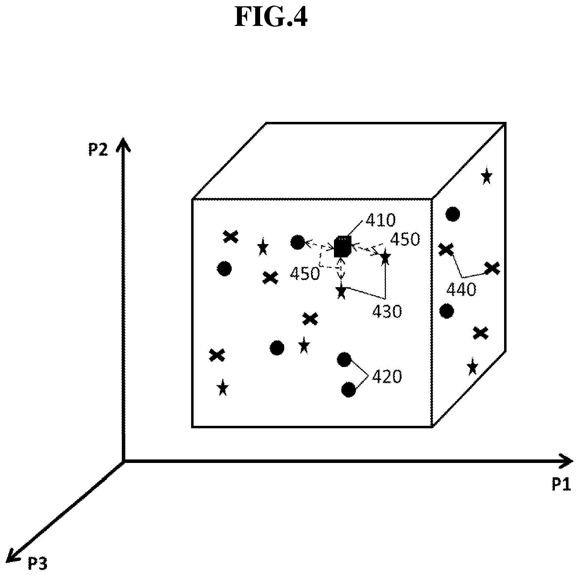

Par exemple, la **figure 4** représente graphiquement, sous forme d'un hypercube, une base de données comportant des paramètres prédéterminés associés à des indicateurs de production photovoltaïque. Ces paramètres prédéterminés sont représentés dans un repère comportant les axes P1, P2 et P3, chaque axe correspondant à une catégorie de paramètres telle que ciel dégagé, nuages clair, nuages sombres et soleil. Le vecteur de paramètres généré est représenté selon un cube 410 et les paramètres prédéterminés sont illustrés par des cercles 420, étoiles 430 et croix 440.

Dans cet exemple, la moyenne pondérée *Kmoy* est calculée à partir des paramètres prédéterminés qui sont dans un rayon réduit 450 autour du vecteur 410.

Par ailleurs, à l'étape 340, un écart type de l'erreur d'estimation de l'indicateur de production d'énergie peut être déterminé. Cet écart type peut permettre de définir un intervalle de confiance (i.e. plage d'indicateur de production d'énergie attendue) autour de l'estimation de l'indicateur de production avec des limites supérieure et inférieure. Cet écart type peut notamment être calculé à partir de la racine d'une moyenne pondérée d'écarts quadratiques entre des indicateurs de production d'énergie des paramètres prédéterminés et l'indicateur de production d'énergie estimé, la moyenne étant pondérée en fonction d'écarts de valeurs entre les paramètres du vecteur généré et les paramètres prédéterminés.

Selon une réalisation possible, l'équation pour calculer l'écart type $\sigma$ est la suivante :

$$\sigma = \sqrt{\frac{\sum poids(k) * (Kmoy - K(k))^2}{\sum poids(k)}}$$

Il convient de noter que l'intervalle de confiance est d'autant plus précis que les paramètres prédéterminés considérés pour le calcul des moyennes *Kmoy* sont nombreux et proches du vecteur de paramètres 410.

Selon une étape 350, le vecteur de paramètres, les moyennes *Kmoy* et/ou l'écart type $\sigma$ sont normalisés par l'intermédiaire d'un modèle ciel clair (modèle de valeurs de rayonnement pour un ciel dégagé, prenant en compte l'évolution zénithale du soleil).

Ainsi à une étape 360, l'indicateur de production d'énergie du système solaire peut être estimé à partir des indicateurs de production d'énergie des paramètres prédéterminés comparés au vecteur.

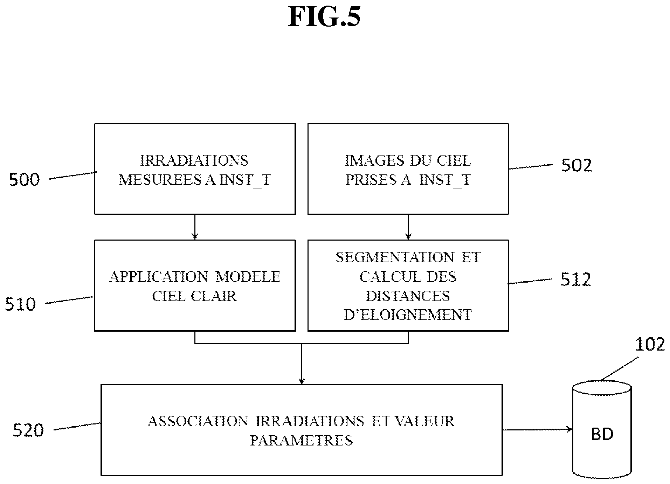

A la **figure 5,** un organigramme composé d'un exemple de succession d'étapes est représenté pour la construction d'une base de données de paramètres prédéterminés.

Aux étapes 500 et 502, des mesures d'irradiations à un instant donné INST_T et des images du ciel concomitantes prises au niveau de la zone terrestre sont reçues.

A l'étape 510, un modèle ciel clair est appliqué aux mesures reçues pour normaliser les mesures et tenir compte de l'évolution zénithale du soleil.

Selon une étape 512, les valeurs de pixels sont extraites et localisées dans les images reçues. Des paramètres sont alors calculés en fonction des valeurs extraites et des distances d'éloignement déterminées selon des catégories d'éléments de ciel telles que le ciel clair, nuage clair, nuage sombre, disque solaire, région circumsolaire.

A l'étape 520, les mesures d'irradiations normalisées sont associées aux paramètres prédéterminés. La mesure d'irradiation associée au paramètre prédéterminé est un indicateur de la production d'énergie du système solaire. Les paramètres prédéterminés ainsi générés sont ensuite stockés dans la mémoire 102.

En variante ou en complément, l'indicateur de production d'énergie peut être une production électrique effective mesurée au niveau du système solaire ou autre.

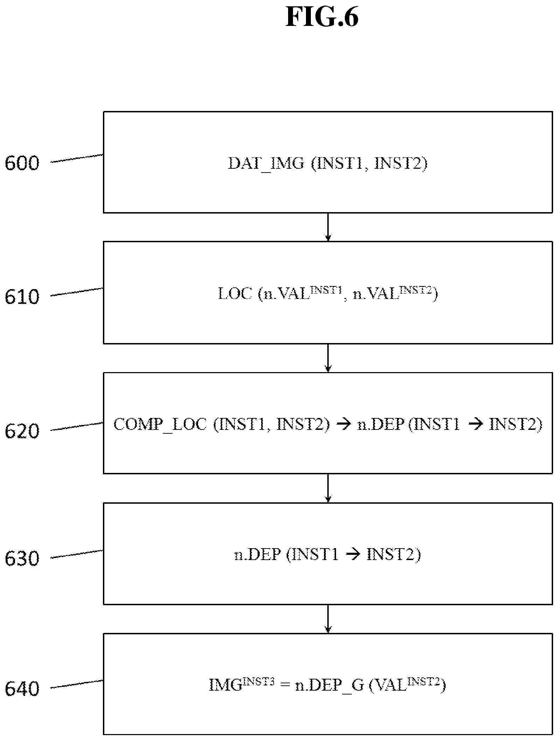

On se réfère maintenant à la **figure 6** qui représente un organigramme composé d'un exemple de succession d'étapes permettant de générer une image de ciel à partir d'images de ciel prises au sol depuis de la zone terrestre.

A l'étape 600, les données DAT_IMG d'images prises à un premier instant INST1 et un deuxième instant INST2 sont reçues par l'interface 106 du dispositif. Les données DAT_IMG comportent des informations sur les valeurs et localisations de pixels des images prises par la caméra 109 aux instants INST1 et INST2. Il est considéré que l'instant INST1 est antérieur à l'instant INST2.

En fonction des données DAT_IMG, n valeurs de pixels aux instants INST1, INST2 peuvent être obtenues, n étant un entier naturel (supérieur ou égal à zéro) : $n.VAL^{INST1}$, $n.VAL^{INST2}$. Par exemple, n peut correspondre au nombre de pixels des images prises aux instants INST1 et INST2, une valeur VAL brute de luminance étant associée à chacun des n pixels de l'instant INST1 et de l'instant INST2.

Selon une étape 610, les valeurs $n.VAL^{INST1}$ et $n.VAL^{INST2}$ obtenues sont localisées. Cette localisation peut être effectuée par identification du positionnement de chacune des n valeurs mesurées aux instants INST1 et INST2.

Selon une étape 620, les localisations déterminées pour les valeurs des instants INST1 et INST2 sont comparées entre elles (via une fonction nommée COMP_LOC par exemple). Les valeurs localisées de l'instant INST1 sont comparées aux valeurs localisées de l'instant INST2 en vue de déterminer les déplacements DEP des n valeurs entre l'instant INST1 et INST2.

Selon une réalisation possible, n déplacements DEP des n valeurs localisées sont déterminées par identification des déplacements suivis par des valeurs de même niveau aux instants INST1 et INST2.

En alternative, seulement p déplacements DEP peuvent être déterminés à partir des valeurs localisées, p étant un entier positif strictement inférieur à n. Cette alternative est à utiliser de préférence pour sélectionner certaines valeurs dont le déplacement est à déterminer, ce qui évite d'une part de calculer le déplacement de toutes les valeurs de l'image et, d'autre part, des erreurs de calcul lorsqu'une valeur à l'instant INST1 n'apparait pas dans les valeurs de l'instant INST2. Par exemple, il est possible de fixer un pas r permettant de ne calculer des vecteurs que tous les r pixels, réduisant ainsi le nombre de vecteurs calculés et donc le temps et les ressources de calcul.

A une étape 630, les déplacements DEP des mêmes valeurs de pixels entre les instants INST1 et INST2 sont déterminés pour les n valeurs de pixels.

Bien entendu, dans des conditions de ciel clair (pas de nuage), les déplacements de valeurs susmentionnés peuvent ne pas être détectés (ils sont nuls) car les valeurs seront identiques aux premier et deuxième instants.

Selon une étape 640, une image pour un instant INST3 à venir (i.e. instant postérieur au deuxième instant INST2) est générée en appliquant les n déplacements n.DEP aux n pixels de l'image prise à l'instant INST2.

L'horizon de prévision est défini selon le temps qui sépare l'instant INST2 (auquel la prévision pour l'instant INST3 est effectuée) de l'instant INST3. L'horizon de prévision peut être de plusieurs minutes (5, 10, 15 voire 60 minutes par exemple).

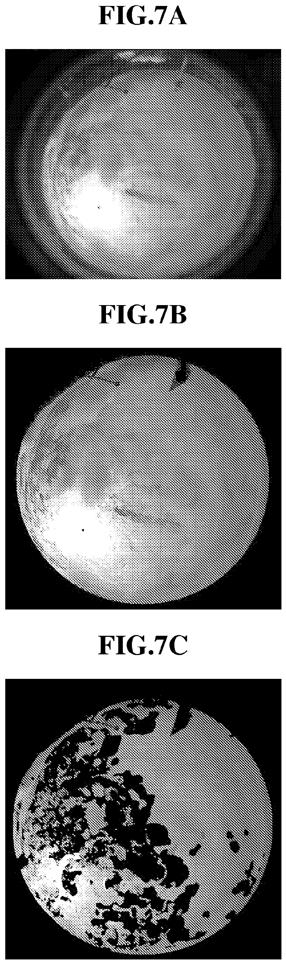

Aux **figures 7,** des exemples d'images prises à partir du sol de la zone de terrestre dans laquelle est installé le système solaire et d'une image générée à partir de ces images. En l'occurrence, les figures 7A et 7B sont des prises de vues prises respectivement à l'instant INST1 et à l'instant INST2. Entre l'instant INST1 et l'instant INST2 se sont par exemple écoulés 10 secondes et le masque nuageux s'est déplacé dans le ciel entre ces deux instants.

Les valeurs de l'instant INST1 sont comparées aux valeurs de l'instant INST2. Des déplacements des valeurs entre l'instant INST1 et l'instant INST2 peuvent être déterminés selon des vecteurs. Les vecteurs correspondent au déplacement du masque nuageux sur l'image, c'est-à-dire à la translation suivie par des mêmes valeurs de pixel entre les premier et deuxième instants.

A la figure 7C, les vecteurs déterminés entre les instants INST1 et INST2 ont été appliqués à partir des pixels de l'image prise à l'instant INST2 pour générer une image à venir à l'instant INST3, par exemple à un horizon de prévision de 5 minutes. Cette image générée est une prévision des conditions de ciel à venir. L'application du procédé d'estimation à l'image ainsi générée permet de prévoir une production d'énergie électrique à venir, dans 5 minutes en l'occurrence.

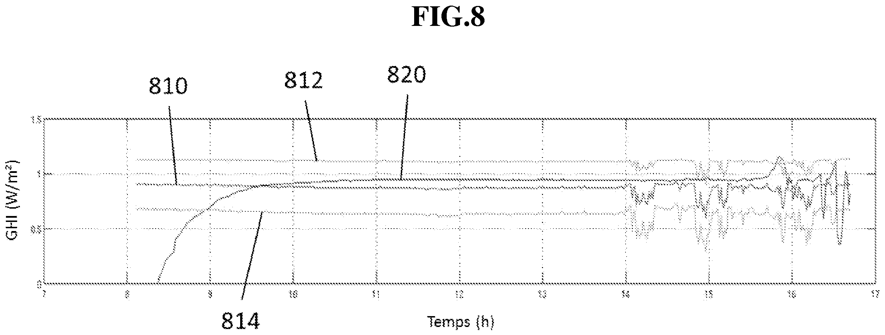

On se réfère maintenant à la **figure 8** sur laquelle sont représentés des exemples de courbes de rayonnement solaire global normalisé (W/m$^2$) évoluant dans le temps (échelle horaire). Parmi ces courbes sont illustrées :

- une courbe 810 de rayonnement solaire prévue à un horizon de 5 minutes selon le procédé d'estimation proposé (i.e. images utilisées pour l'estimation sont ici des images prévues à un horizon de 5 minutes, lesquelles images prévues sont générées à partir d'images du ciel prises par la caméra 109, selon les étapes susmentionnées) ;

- des courbes 812 et 814 correspondant aux bornes supérieure et inférieure de l'intervalle de confiance qui peut être calculé à partir de l'écart type $\sigma$ suivant :

$$\sigma = \sqrt{\frac{\sum poids(k) * (Kmoy - K(k))^2}{\sum poids(k)}}$$

- une courbe 820 de mesures effectives et normalisées du rayonnement au niveau du système solaire (mesures prises par un instrument de type capteur pyranométrique par exemple, placé sur les panneaux solaires 110).

Dans cet exemple, l'indicateur de production d'énergie est donc un rayonnement solaire. Il convient de constater que les mesures effectives 820 de rayonnement sont très proches des valeurs de rayonnement prévues 810 selon le procédé d'estimation proposé.

Cette qualité d'estimation et de prévision autorisée par le procédé peut permettre de connaître et anticiper précisément l'évolution d'indicateurs de production d'énergie du système solaire. Ainsi, la capacité de production du système solaire peut être déterminée avec justesse, même à des horizons proches (5, 10, 15 voire 60 minutes).

Par ailleurs, l'intervalle de confiance (espace compris entre les courbes 812 et 814) permet de prévoir une plage de valeurs autour de l'estimation de l'indicateur de production d'énergie, afin notamment de prendre en compte d'éventuelles légères variations liées par exemple à des changements brutaux des conditions climatiques.

L'invention a été décrite en référence à des modes de réalisations particuliers qui ne sont pas limitatifs. Bien entendu, la présente invention ne se limite pas à la forme de réalisation décrite à titre d'exemple et elle s'étend à d'autres variantes. Par exemple, les images reçues peuvent être prises par plusieurs caméras distinctes situées à différentes positions dans la zone terrestre. L'utilisation de multiples caméras (qui peuvent être reliées entre elles par un réseau de communication maillé par exemple) peut permettre de prévoir plus précisément les déplacements de masques nuageux et ainsi affiner les estimations de production d'énergie à venir. Une telle réalisation permet en outre d'établir une carte de rayonnement estimé autour du système solaire ou de l'ensemble de systèmes solaires considéré.

**Revendications**

1. Procédé d'estimation d'indicateur de production d'énergie d'un système solaire, ledit procédé comprenant les étapes de :

   a) réception (300) d'images du ciel prises au sol depuis une zone terrestre comportant le système solaire (110), chaque image reçue comprenant au moins un repère optique (210, 212) ;
   b) extraction des valeurs de pixels et localisation de pixels d'une image issue des images reçues ;
   c) détermination (310) des distances d'éloignement entre les pixels localisés et l'au moins un repère optique de l'image issue des images reçues ;
   d) génération (320) d'un vecteur de paramètres à partir d'une classification des pixels selon les valeurs extraites et les distances d'éloignement déterminées ;
   e) comparaison (330) des paramètres du vecteur généré avec des paramètres prédéterminés, les paramètres prédéterminés étant respectivement associés à des indicateurs de production d'énergie ;
   f) estimation (360) de l'indicateur de production d'énergie du système solaire à partir des indicateurs de production d'énergie des paramètres prédéterminés comparés au vecteur généré.

   **caractérisé en ce que**, à l'étape f), l'estimation de l'indicateur de production d'énergie du système solaire est en outre issue d'une pondération des indicateurs de production d'énergie associés aux paramètres prédéterminés, la pondération étant fonction d'écarts de valeurs entre les paramètres du vecteur et les paramètres prédéterminés.

2. Procédé selon la revendication 1, comprenant en outre une étape de détermination d'une plage d'indicateur de production d'énergie qui est fonction d'un écart type calculé à partir de la racine d'une moyenne pondérée d'écarts quadratiques entre des indicateurs de production d'énergie des paramètres prédéterminés et l'indicateur de production d'énergie estimé, la moyenne étant pondérée en fonction d'écarts de valeurs entre les paramètres du vecteur généré et les paramètres prédéterminés.

3. Procédé selon l'une des revendications précédentes, dans lequel l'image comprend un premier repère optique (210) correspondant au centre optique d'un appareil de prise d'image utilisé pour capturer les images reçues.

4. Procédé selon l'une des revendications précédentes, dans lequel l'image comprend un deuxième repère optique (212) correspondant à la localisation du soleil sur les images reçues.

**5.** Procédé selon l'une des revendications précédentes, dans lequel à l'étape d), le vecteur de paramètres dans lequel sont classifiés les pixels comprend au moins :

- une première catégorie de paramètres correspondant à un ciel clair,
- une deuxième catégorie de paramètres correspondant au soleil,
- une troisième catégorie de paramètres correspondant aux nuages.

**6.** Procédé selon la revendication 5, dans lequel la troisième catégorie de paramètres comprend :

- une première sous-catégorie de paramètres correspondant aux nuages clairs, dans laquelle sont classifiés des pixels de valeur supérieure ou égale à un seuil,
- une deuxième sous-catégorie de paramètres correspondant aux nuages sombres, dans laquelle sont classifiés des pixels de valeur inférieure au seuil.

**7.** Procédé selon la revendication 5 ou 6, comprenant en outre une étape de détermination d'une proportion de couverture nuageuse sur l'image issue des images reçues en fonction des pixels classifiés dans la troisième catégorie de paramètres.

**8.** Procédé selon l'une des revendications précédentes, dans lequel à l'étape b), l'image issue des images reçues est une image générée selon les étapes suivantes :

- récupération (600) parmi les images reçues d'images prises à au moins un premier instant et un deuxième instant, le premier instant étant antérieur au deuxième instant ;
- localisation (610) des valeurs de pixels sur les images prises respectivement au premier et au deuxième instant ;
- comparaison (620) des localisations des valeurs de pixels au premier instant et au deuxième instant ;
- détermination (630) des déplacements, entre les premier et deuxième instants, d'au moins une partie des valeurs de pixels localisées ;
- génération (640) de l'image du ciel pour un troisième instant en fonction des déplacements déterminés, le troisième instant étant postérieur au deuxième instant.

**9.** Procédé selon l'une des revendications précédentes, dans lequel les images reçues sont des images prises au sol au niveau de la zone terrestre par un appareil de prise d'image (109) muni d'un objectif ayant un angle de champ supérieur à 170 degrés.

**10.** Procédé selon l'une des revendications précédentes, dans lequel une donnée de :

- rayonnement solaire effectif au sol dans la zone terrestre, ou
- production d'énergie effective du système solaire,

est reçue, la donnée reçue étant utilisée pour étalonner ou corriger les indicateurs de production d'énergie associés aux paramètres prédéterminés.

**11.** Produit programme informatique comportant des instructions pour la mise en œuvre du procédé selon l'une des revendications 1 à 10, lorsque ce programme est exécuté par une unité de traitement de données telle qu'un processeur.

**12.** Dispositif (100) d'estimation d'indicateur de production d'énergie d'un système solaire (110), ledit dispositif d'estimation comprenant au moins :

- une interface d'entrée (106) pour la réception d'images du ciel prises au sol depuis une zone terrestre comportant le système solaire ;
- une mémoire (102) configurée pour stocker :

  - les images du ciel reçues, et
  - des paramètres prédéterminés respectivement associés à des indicateurs de production d'énergie ;

- une unité de traitement de données (104) connectée à l'interface d'entrée et à la mémoire ;

ladite unité de traitement de données étant configurée pour mettre en œuvre un procédé selon l'une des revendications 1 à 10.

13. Dispositif selon la revendication 12, dans lequel l'interface d'entrée est connectée à un appareil de prise d'image (109) orienté vers le ciel au niveau de la zone terrestre, l'appareil de prise d'image étant muni d'un objectif ayant un angle de champ supérieur à 170 degrés.

14. Dispositif selon la revendication 12 ou 13, dans lequel l'interface d'entrée est en outre configurée pour recevoir des données de :

- rayonnement solaire effectif au sol dans la zone terrestre, ou
- production d'énergie effective du système solaire.

**Patentansprüche**

1. Verfahren zur Schätzung eines Energieerzeugungsindikators für eine Solaranlage, wobei das Verfahren die Schritte umfasst:

a) Empfang (300) von Bildern des Himmels, die am Boden von einem Landgebiet aus aufgenommen wurden, das die Solaranlage (110) umfasst, wobei jedes empfangene Bild wenigstens einen optischen Bezugspunkt (210, 212) umfasst;
b) Extraktion der Werte von Pixeln und Lokalisierung von Pixeln eines Bildes, das aus den empfangenen Bildern hervorgegangen ist;
c) Bestimmung (310) der Abstände zwischen den lokalisierten Pixeln und dem wenigstens einen optischen Bezugspunkt des aus den empfangenen Bildern hervorgegangenen Bildes;
d) Erzeugung (320) eines Vektors von Parametern aus einer Klassifizierung der Pixel nach den extrahierten Werten und den bestimmten Abständen;
e) Vergleich (330) der Parameter des erzeugten Vektors mit vorbestimmten Parametern, wobei die vorbestimmten Parameter jeweils Energieerzeugungsindikatoren zugeordnet sind;
f) Schätzung (360) des Energieerzeugungsindikators der Solaranlage anhand der Energieerzeugungsindikatoren der mit dem erzeugten Vektor verglichenen vorbestimmten Parameter,

**dadurch gekennzeichnet, dass** in Schritt f) die Schätzung des Energieerzeugungsindikators der Solaranlage außerdem aus einer Gewichtung der den vorbestimmten Parametern zugeordneten Energieerzeugungsindikatoren resultiert, wobei die Gewichtung von Werteabweichungen zwischen den Parametern des Vektors und den vorbestimmten Parametern abhängt.

2. Verfahren nach Anspruch 1, welches außerdem einen Schritt der Bestimmung eines Bereichs des Energieerzeugungsindikators umfasst, welcher von einer Standardabweichung abhängt, die aus der Wurzel eines gewichteten Mittelwerts von quadratischen Abweichungen zwischen Energieerzeugungsindikatoren der vorbestimmten Parameter und dem geschätzten Energieerzeugungsindikator berechnet wird, wobei der Mittelwert in Abhängigkeit von Werteabweichungen zwischen den Parametern des erzeugten Vektors und den vorbestimmten Parametern gewichtet wird.

3. Verfahren nach einem der vorhergehenden Ansprüche, wobei das Bild einen ersten optischen Bezugspunkt (210) umfasst, der dem optischen Mittelpunkt einer Bildaufnahmevorrichtung entspricht, die verwendet wird, um die empfangenen Bilder aufzunehmen.

4. Verfahren nach einem der vorhergehenden Ansprüche, wobei das Bild einen zweiten optischen Bezugspunkt (212) umfasst, der dem Ort der Sonne auf den empfangenen Bildern entspricht.

5. Verfahren nach einem der vorhergehenden Ansprüche, wobei in Schritt d) der Vektor von Parametern, in welchem die Pixel klassifiziert sind, wenigstens umfasst:

- eine erste Kategorie von Parametern, die einem heiteren Himmel entspricht,
- eine zweite Kategorie von Parametern, die der Sonne entspricht,
- eine dritte Kategorie von Parametern, die den Wolken entspricht.

6. Verfahren nach Anspruch 5, wobei die dritte Kategorie von Parametern umfasst:

   ▪ eine erste Unterkategorie von Parametern, die den hellen Wolken entspricht, in welcher Pixel mit einem Wert klassifiziert werden, der größer oder gleich einem Schwellenwert ist,
   ▪ eine zweite Unterkategorie von Parametern, die den dunklen Wolken entspricht, in welcher Pixel mit einem Wert klassifiziert werden, der kleiner als der Schwellenwert ist.

7. Verfahren nach Anspruch 5 oder 6, welches außerdem einen Schritt der Bestimmung eines Anteils der Wolkendecke auf dem aus den empfangenen Bildern hervorgegangenen Bild in Abhängigkeit von den Pixel, die in der dritten Kategorie von Parametern klassifiziert sind, umfasst.

8. Verfahren nach einem der vorhergehenden Ansprüche, wobei in Schritt b) das aus den empfangenen Bildern hervorgegangene Bild ein Bild ist, das gemäß den folgenden Schritten erzeugt wird:

   - Abrufen (600), aus den empfangenen Bildern, von Bildern, die zu wenigstens einem ersten Zeitpunkt und einem zweiten Zeitpunkt aufgenommen wurden, wobei der erste Zeitpunkt vor dem zweiten Zeitpunkt liegt;
   - Lokalisierung (610) der Werte von Pixeln auf den zum ersten bzw. zum zweiten Zeitpunkt aufgenommenen Bildern;
   - Vergleich (620) der Lokalisierungen der Werte von Pixeln zum ersten Zeitpunkt und zum zweiten Zeitpunkt;
   - Bestimmung (630) der Verlagerungen wenigstens eines Teils der Werte von lokalisierten Pixeln zwischen dem ersten und dem zweiten Zeitpunkt;
   - Erzeugung (640) des Bildes des Himmels für einen dritten Zeitpunkt in Abhängigkeit von den bestimmten Verlagerungen, wobei der dritte Zeitpunkt nach dem zweiten Zeitpunkt liegt.

9. Verfahren nach einem der vorhergehenden Ansprüche, wobei die empfangenen Bilder Bilder sind, die am Boden im Bereich des Landgebietes von einer Bildaufnahmevorrichtung (109) aufgenommen wurden, die mit einem Objektiv ausgestattet ist, das einen Bildwinkel von mehr als 170 Grad aufweist.

10. Verfahren nach einem der vorhergehenden Ansprüche, wobei eine Datenangabe

    ▪ der effektiven Sonneneinstrahlung am Boden in dem Landgebiet, oder
    ▪ der effektiven Energieerzeugung der Solaranlage empfangen wird, wobei die empfangene Datenangabe verwendet wird, um die den vorbestimmten Parametern zugeordneten Energieerzeugungsindikatoren zu kalibrieren oder zu korrigieren.

11. Computerprogrammprodukt, welches Anweisungen zur Durchführung des Verfahrens nach einem der Ansprüche 1 bis 10, wenn dieses Programm von einer Datenverarbeitungseinheit wie etwa einem Prozessor ausgeführt wird, umfasst.

12. Vorrichtung (100) zur Schätzung eines Energieerzeugungsindikators für eine Solaranlage (110), wobei die Schätzvorrichtung wenigstens umfasst:

    - eine Eingangsschnittstelle (106) für den Empfang von Bildern des Himmels, die am Boden von einem Landgebiet aus aufgenommen wurden, das die Solaranlage umfasst;
    - einen Speicher (102), der dafür ausgelegt ist zu speichern:

      ▪ die empfangenen Bilder des Himmels, und
      ▪ vorbestimmte Parameter, die jeweils Energieerzeugungsindikatoren zugeordnet sind;

    - eine Datenverarbeitungseinheit (104), die mit der Eingangsschnittstelle und mit dem Speicher verbunden ist;

    wobei die Datenverarbeitungseinheit dafür ausgelegt ist, ein Verfahren nach einem der Ansprüche 1 bis 10 durchzuführen.

13. Vorrichtung nach Anspruch 12, wobei die Eingangsschnittstelle mit einer Bildaufnahmevorrichtung (109) verbunden ist, die im Bereich des Landgebietes zum Himmel gerichtet ist, wobei die Bildaufnahmevorrichtung mit einem Objektiv ausgestattet ist, das einen Bildwinkel von mehr als 170 Grad aufweist.

**14.** Vorrichtung nach Anspruch 12 oder 13, wobei die Eingangsschnittstelle außerdem dafür ausgelegt ist, Daten zu empfangen:

- der effektiven Sonneneinstrahlung am Boden in dem Landgebiet, oder
- der effektiven Energieerzeugung der Solaranlage.

**Claims**

**1.** Method for estimating an energy production indicator of a solar system, said method comprising steps of:

a) receiving (300) images from the sky taken on the ground from a land zone including the solar system (110), each image received comprising at least one optical marker (210, 212);
b) extracting pixel values and localising pixels of an image from the images received;
c) determining (310) distances between the localised pixels and the at least one optical marker of the image from the images received;
d) generating (320) a parameter vector from a classification of the pixels according to the values extracted and the distances determined;
e) comparing (330) the parameters of the vector generated with predetermined parameters, the predetermined parameters being respectively associated with energy production indicators;
f) estimating (360) the energy production indicator of the solar system from the energy production indicators of the predetermined parameters compared with the vector generated,

**characterised in that**, in step f), estimating the energy production indicator of the solar system furthermore comes from a weighting of the energy production indicators associated with the predetermined parameters, the weighting being a function of value deviations between the parameters of the vector and the predetermined parameters.

**2.** Method according to claim 1, further comprising a step of determining an energy production indicator range which is a function of a standard deviation calculated from the root of a weighted average of quadratic deviations between energy production indicators of the predetermined parameters and the estimated energy production indicator, the average being weighted as a function of the value deviations between the parameters of the vector generated and the predetermined parameters.

**3.** Method according to one of the preceding claims, wherein the image comprises a first optical marker (210) corresponding to the optical centre of an image-taking apparatus used to capture the images received.

**4.** Method according to one of the preceding claims, wherein the image comprises a second optical marker (212) corresponding to the localisation of the sun on the images received.

**5.** Method according to one of the preceding claims, wherein in step d), the parameter vector wherein the pixels are classified comprises at least:

- a first parameter category corresponding to a clear sky,
- a second parameter category corresponding to the sun,
- a third parameter category corresponding to the clouds.

**6.** Method according to claim 5, wherein the third parameter category comprises:

- a first parameter sub-category corresponding to the clear clouds, wherein pixels of a value greater than or equal to a threshold are classified,
- a second parameter sub-category corresponding to the dark clouds, wherein pixels of a value less than or equal to the threshold are classified.

**7.** Method according to claim 5 or 6, further comprising a step of determining a proportion of cloud coverage on the image from the images received as a function of the pixels classified in the third parameter category.

**8.** Method according to one of the preceding claims, wherein in step b), the image from the images received is an image generated according to the following steps:

- recovering (600) from among the images received of images taken at at least one first time and one second time, the first time being prior to the second time;
- localising (610) the pixel values on the images taken respectively at the first and at the second time;
- comparing (620) the localisations of the pixel values at the first time and at the second time;
- determining (630) the movements, between the first and second times, of at least some of the localised pixel values;
- generating (640) the image of the sky for a third time as a function of the movements determined, the third time being after the second time.

9. Method according to one of the preceding claims, wherein the images received are images taken on the ground at the level of the land zone by an image-taking apparatus (109) equipped with a lens having a field angle greater than 170 degrees.

10. Method according to one of the preceding claims, wherein a data of:

   ▪ actual solar radiation on the ground in the land zone, or
   ▪ actual energy production of the solar system,

is received, the data received being used to calibrate or correct the energy production indicators associated with the predetermined parameters.

11. Computer program product comprising instructions for the implementation of the method according to one of claims 1 to 10, when this program is executed by a data processing unit such as a processor.

12. Device (100) for estimating an energy production indicator of a solar system (110), said estimation device comprising at least:

   - an input interface (106) for receiving images of the sky taken on the ground from a land zone including the solar system;
   - a memory (102) configured to store:

      ▪ the images of the sky received, and
      ▪ predetermined parameters respectively associated with energy production indicators;

   - a data processing unit (104) connected to the input interface and to the memory; said data processing unit being configured to implement a method according to one of claims 1 to 10.

13. Device according to claim 12, wherein the input interface is connected to an image-taking apparatus (109) oriented towards the sky at the level of the land zone, the image-taking apparatus being equipped with a lens having a field angle greater than 170 degrees.

14. Device according to claim 12 or 13, wherein the input interface is furthermore configured to receive data of:

   ▪ actual solar radiation on the ground in the land zone, or
   ▪ actual energy production of the solar system.

# FIG.1

# FIG.2A

# FIG.2B

# FIG.2C

# FIG.2D

# FIG.3

300 — | RECEPTION D'IMAGES |

310 — | DETERMINATION DES DISTANCES ENTRE PIXELS ET REPERE(S) OPTIQUE(S) |

320 — | GENERATION DU VECTEUR DE PARAMETRES |

330 — | COMPARAISON DU VECTEUR DE PARAMETRES |  ↔  102 — BD

340 — | DETERMINATION DE MOYENNE PONDEREE ET ECART-TYPE |

350 — | APPLICATION MODELE CIEL CLAIR |

360 — | ESTIMATION DE L'INDICATEUR DE PRODUCTION D'ENERGIE |

# FIG.4

# FIG.5

500 — IRRADIATIONS MESUREES A INST_T

IMAGES DU CIEL PRISES A INST_T — 502

510 — APPLICATION MODELE CIEL CLAIR

SEGMENTATION ET CALCUL DES DISTANCES D'ELOIGNEMENT — 512

102

520 — ASSOCIATION IRRADIATIONS ET VALEUR PARAMETRES

BD

# FIG.6

600 — DAT_IMG (INST1, INST2)

610 — LOC (n.VAL$^{INST1}$, n.VAL$^{INST2}$)

620 — COMP_LOC (INST1, INST2) → n.DEP (INST1 → INST2)

630 — n.DEP (INST1 → INST2)

640 — IMG$^{INST3}$ = n.DEP_G (VAL$^{INST2}$)

## FIG.7A

## FIG.7B

## FIG.7C

# FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100309330 A

**Littérature non-brevet citée dans la description**

- **CHARLOTTE GAUCHET et al.** Surface solar irradiance estimation with low-cost fish-eye camera. *Workshop on Remote Sensing Measurements for Renewable Energy,* 2012
- **ROMAIN DAMBREVILLE.** Prévision du rayonnement solaire global par télédétection pour la gestion de la production d'énergie photovoltaïque. *Thèse de l'école doctorale EEATS,* 2014
- Intra-hour forecasting with a total sky imager at the UC San Diego solar energy testbed. **CHI WAI CHOW et al.** Solar energy. Pergamon Press, vol. 85
- **DAMBREVILLE ROMAIN et al.** Very short term forecasting of the Global Horizontal Irradiance through Helioclim maps. *5th international renewable energy congress IREC,* 2014